# EUROPÄISCHE PATENTSCHRIFT

(11) **EP 2 334 461 B1**
(45) Veröffentlichungstag und Bekanntmachung des Hinweises auf die Patenterteilung: **05.12.2012**
(21) Anmeldenummer: 09764701.0
(22) Anmeldetag: 14.10.2009
(51) Int. Cl.: B23K 20/12, F01D 5/34

(54) **BAUTEIL FÜR EINE GASTURBINE UND VERFAHREN ZUR HERSTELLUNG DES BAUTEILS**
COMPONENT FOR A GAS TURBINE AND METHOD FOR PRODUCING THE COMPONENT
COMPOSANT POUR UNE TURBINE À GAZ ET PROCÉDÉ DE PRODUCTION DE CE COMPOSANT

(30) Priorität: 18.10.2008 DE 102008052247
(43) Veröffentlichungstag der Anmeldung: 22.06.2011
(73) Patentinhaber: MTU Aero Engines GmbH, 80995 München (DE)
(72) Erfinder: SMARSLY, Wilfried, 81669 München (DE); BAMBERG, Joachim, 85221 Dachau (DE); ESSLINGER, Jörg, 85221 Dachau (DE)
(86) Internationale Anmeldenummer: PCT/DE2009/001429
(87) Internationale Veröffentlichungsnummer: WO 2010/043209

(56) Entgegenhaltungen:
- EP-A1- 1 002 935
- EP-A1- 1 698 423
- EP-A2- 1 526 252
- DE-A1- 2 510 286
- DE-A1-102004 022 578
- DE-A1-102005 019 356
- US-A- 2 831 958

## Beschreibung

Die Erfindung betrifft ein Bauteil für eine Gasturbine nach dem Oberbegriff des Anspruchs 1 sowie ein Verfahren zur Herstellung des Bauteils.

Gasturbinenrotoren verfügen über einen Rotorgrundkörper sowie über mehrere mit dem Rotorgrundkörper rotierende Laufschaufeln. Die Laufschaufeln können entweder integraler Bestandteil des Rotorgrundkörpers sein oder über Schaufelfüße in einer oder mehreren Nuten des Rotorgrundkörpers verankert sein. Rotoren mit integraler Beschaufelung bezeichnet man als Blisk oder Bling, abhängig davon, ob ein scheibenförmiger oder ein ringförmiger Rotorgrundkörper vorliegt.

Aus der DE 10 2005 019 356 A1 ist ein Verfahren zum Fügen einer Laufschaufel an einen Rotorgrundkörper bei der Herstellung oder Reparatur eines integral beschaufelten Gasturbinenrotors durch Reibschweißen bekannt. Beim Reibschweißen werden Bauteile durch Reibung aneinander gefügt und integral miteinander verbunden. Beim linearen Reibschweißen wird ein Bauteil translatorisch hin- und herbewegt, während das andere Bauteil stillsteht und mit einer bestimmten Kraft gegen das bewegte Bauteil gedrückt wird. Hierbei passen sich die Fügeflächen der miteinander zu verbindenden Bauteile durch Warmverschmieden aneinander an. Gemäß dem im Stand der Technik beschriebenen Verfahren werden die beiden miteinander zu verbindenden bzw. aneinander zu fügenden Bauteile, d.h. der Rotorgrundkörper und die Laufschaufel, sowie ein weiteres Fügeteil als Adapterelement bereitgestellt. Die beiden miteinander zu verbindenden Bauteile und das Adapterelement werden so zueinander ausgerichtet, dass das Adapterelement als Einsatz zwischen den beiden Bauteilen angeordnet ist. Zur Verbindung der Bauteile wird das Adapterelement gegenüber den beiden Bauteilen bewegt, wobei über die stillstehenden Bauteile eine Stauchkraft auf die Fügezonen zwischen den Bauteilen und dem Adapterelement ausgeübt wird.

Mit dem beschriebenen Verfahren kann auf relativ einfache Weise ein integral beschaufelter Gasturbinenrotor als Blisk oder Bling hergestellt werden. Allerdings müssen die zu fügenden Bauteile und das Adapterelement aus dem gleichen Werkstoff bestehen. Falls also der Rotorgrundkörper und die Laufschaufel aus einer Titanbasislegierung bestehen, wird ein Adapterelement verwendet, das ebenfalls aus einer Titanbasislegierung besteht.

Die EP 1526252 offenbart ebenfalls ein Verfahren zum Fügen einer Laufschaufel an einen Rotorgrund korper gemäß dem Stand der Technik.

Eine hybride oder gradierte Bliskbauweise für einen Gasturbinenrotor, bei der der Rotorgrundkörper aus einer hochwarmfesten Nickellegierung wie z. B. Inconel 718 und die Laufschaufeln der Turbine aus einer TiAl-Legierung bestehen, konnte bisher nicht realisiert werden, da bei der Einsatzemperatur von etwa 650 °C eine Diffusion des Schaufelwerkstoffs, insbesondere des Aluminiums, in die Fügezone bzw. das Material des Rotorgrundkörpers erfolgt. Dadurch wird die chemische Zusammensetzung des Rotorgrundkörpers und der Laufschaufel in der Verbindungszone so verändert, dass ein Werkstoffzustand mit neuen Phasen entsteht. Durch diese Phasenbildung ist aber die Zuverlässigkeit und Lebensdauer der Verbindungszone reduziert. Die Haltbarkeit der Bauteilverbindung wird außerdem durch die unterschiedliche Wärmeausdehnung der Werkstoffe beeinträchtigt.

Hiervon ausgehend liegt der vorliegenden Erfindung die Aufgabe zu Grunde, ein neuartiges Bauteil für eine Gasturbine in hybrider Bliskbauweise zu schaffen.

Diese Aufgabe wird durch das Bauteil einer Gasturbine gemäß Anspruch 1 gelöst.

Erfindungsgemäß ist vorgesehen, dass das Bauteil einen Rotorgrundkörper aus einer hochwarmfesten Nickellegierung und eine Vielzahl von an den Rotorgrundkörper angefügten Turbinenschaufeln umfasst, die jeweils ein Schaufelblatt aus einer Titanlegierung und einen Schaufelfuß umfassen. Der Schaufelfuß ist als Adapterelement ausgebildet, das aus einem sowohl mit der Titanlegierung als auch der hochwarmfesten Nickellegierung verschweißbaren Werkstoff besteht, wobei das Adapterelement mit dem Rotorgrundkörper und dem Schaufelblatt durch Fügen integral verbunden ist.

Die Erfindung ermöglicht damit die Realisierung der extrem leichten Bliskbauweise von hybriden Gasturbinenrotoren, beispielsweise gemäß dem in der DE 10 2005 019 356 A1 beschriebenen Verfahren, mit leichten TiAl-Schaufeln und einem Rotorgrundkörper aus einem hochwarmfesten Werkstoff, der höchsten Belastungen standhält. Da die Fügezonen am Adapterelement jeweils an Werkstoffe mit gleicher oder ähnlicher Zusammensetzung angrenzen, können zu Sprödphasenbildung führende Diffusionsvorgänge sicher unterbunden werden. Die Verbindung des Adapterelements mit dem Schaufelblatt bzw. dem Rotorgrundkörper ist daher hinreichend zuverlässig und weist eine hohe Lebensdauer auf. Die Qualität der Verbindungszonen am Adapterelement kann durch zerstörungsfreie Prüfung sicher überwacht werden. Die Titanlegierung des Schaufelblattes ist vorzugsweise aus der Gruppe der Titanbasislegierungen und der TiAl-Legierungen ausgewählt. Bevorzugt ist das Schaufelblatt aus einer TiAl-Legierung mit Anteilen von Titan, Aluminium und Niob bei einem Aluminiumgehalt zwischen 35 und 60 Gew.-% und einem Niobanteil von 2 bis 16 Gew.-% gebildet, wie sie in der DE 10 2004 022 578 Albeschrieben sind. Besonders bevorzugt ist die Titanlegierung Ti44A15Nb (at%).

Als hochwarmfeste Nickellegierung für den Rotorgrundkörper wird bevorzugt eine Nickel-Superlegierung verwendet, wie beispielsweise Inconel 718 mit 50 bis 55 % Ni, 17 bis 21 % Cr, geringeren Anteilen von Nb/Ta, Mo, Ti, Al und weiteren Spurenelementen, und zum Rest Eisen. Die Nickel-Superlegierungen zeichnen sich durch ihre Korrosionsbeständigkeit und Ermüdungsfestigkeit bei hohen Temperaturen aus. Andere, im Stand der Technik bekannte Nickel-Superlegierungen oder Nickelbasislegierungen können ebenfalls eingesetzt werden.

Gemäß einer ersten Ausführungsform der Erfindung wird ein Adapterelement mit einem zweigeteilten Aufbau bereitgestellt. Das Adapterelement weist wenigstens eine erste Schicht auf, die aus der hochwarmfesten Nickellegierung des Rotorgrundkörpers besteht, und wenigstens eine zweite Schicht, die aus der Titanlegierung des Schaufelblatts gebildet ist. Zwischen der ersten und der zweiten Schicht ist eine Zwischenschicht vorgesehen, die als Diffusionsbarriere für Sprödphasen bildende Elemente, insbesondere Aluminium, wirkt.

Die Zwischenschicht ist bevorzugt aus einer Matrixlegierung mit gleichmäßig darin verteilten Metallpartikeln zusammengesetzt. Die Matrixlegierung besteht aus einer hochwarmfesten Nickellegierung, wie z.B. Inconel 718, oder einer TiAl-Legierung, wie sie auch für den Rotorgrundkörper bzw. das Schaufelblatt verwendet werden. Die Metallpartikel sind vorzugsweise aus Legierungen von Refraktärmetallen und/oder Platinmetalllen gebildet.

Besonders bevorzugt bestehen die Metallpartikel aus Legierungen mit 2 bis 60 Gew.-% Aluminium, und zum Rest aus wenigstens einem zweiten Metall aus der Gruppe Rhenium, Iridium, Ruthenium, Platin, Tantal, Niob, Molybdän und Wolfram. Eine weitere bevorzugte Zusammensetzung der Metallpartikel umfasst 2 bis 40 Gew.-% Aluminium, 5 bis 20 Gew.-% eines Metalls aus der aus Nickel, Kobalt, Vanadium und Chrom bestehenden Gruppe, und zum Rest wenigstens ein Metall aus der aus Rhenium, Iridium, Ruthenium, Platin, Tantal, Niob, Molybdän und Wolfram bestehenden Gruppe.

Die Metallpartikel weisen vorzugsweise eine mittlere Größe von 0,1 bis 200 um auf und liegen bevorzugt in einem Anteil von 5 bis 45 Vol% in der Metallmatrix vor. Besonders bevorzugt sind die Metallpartikel vollständig von der Matrixlegierung umschlossen, so dass an der Oberfläche der Zwischenschicht keine Metallpartikel vorhanden sind. Die Dicke der Zwischenschicht beträgt vorzugsweise zwischen 0,5 und 2 mm.

Die Zwischenschicht kann durch herkömmliche pulvermetallurgische Verfahren hergestellt werden, beispielsweise durch Sintern von Pulvern aus der Matrixlegierung und den Metallpartikeln. Dabei kann das Sintern auf alle dem Fachmann bekannte Weisen, beispielsweise mittels Laser, Elektronenstrahl oder direkten Stromdurchgang, jeweils mit und ohne Anwendung von Druck, erfolgen. Auch ein schichtweises Sintern ist möglich, wodurch auch gradierte Strukturen erzeugt werden können.

Das Einbringen der Metallpartikel in die Matrixlegierung führt zunächst zu einer erhöhten Gitterverspannung der Matrix und einer Reduktion von Gitterleerstellen. Dadurch wird die Diffusionsgeschwindigkeit der durch die Zwischenschicht diffundierenden Atome reduziert. Desweiteren können die in der Matrixlegierung verteilten Metallpartikel die aus der Titanlegierung der zweiten Schicht des Adapterelements bzw. des Schaufelblatts heraus diffundierenden Aluminium- und Titanmoleküle sowohl gelöst als auch als intermetallische Phasen gebunden aufnehmen. Aufgrund der geringen Beweglichkeit der Atome der Refraktärmetalle bzw. der Platinmetalle und der Bildung intermetallischer Phasen sind die Metallpartikel bei Temperaturen bis 800 °C sehr stabil. Somit wird die Diffusion von Titan und Aluminium durch die Zwischenschicht bei der Einsatztemperatur stark behindert und die Bildung intermetallischer Phasen in der ersten, aus einer hochwarmfesten Nickellegierung bestehenden Schicht des Adapterelements reduziert. Die Festigkeit des Rotorgrundkörpers bleibt damit innerhalb der zulässigen Grenzen.

Gemäß einer nicht beanspruckten Ausführungsform der Erfindung besitzt das Adapterelement einen gradierten Aufbau, wobei die Zusammensetzung des Adapterelements stufenweise oder kontinuierlich vom Werkstoff des Rotorgrundkörpers, beispielsweise Inconel 718, zum Werkstoff des Schaufelblatts, beispielsweise Ti44A15Nb, wechselt. Ein solches Adapterelement kann beispielsweise durch Laser-Pulverauftragsschweißen oder andere bekannte pulvermetallurgische Verfahren hergestellt werden. Das erfindungsgemäße Adapterelement ermöglicht einen gradierten Abbau der Wärmeausdehnungsunterschiede und der chemischen Gradienten, sodass keine Diffusion von Elementen aus dem Schaufelwerkstoff bzw. dem Werkstoff des Rotorgrundkörpers in die Fügezonen stattfindet.

Gemäß einer weiteren Ausführungsform der Erfindung ist schließlich vorgesehen, dass das Adapterelement einen monolithischen Aufbau besitzt, wobei ein Werkstoff mit einer Zusammensetzung verwendet wird, die sowohl Elemente des Werkstoffs für das Schaufelblatt als auch Elemente des Werkstoffs für den Rotorgrundkörper umfasst.

Bevorzugt ist der Werkstoff für das monolithische Adapterelement eine eutektische NiAl-Legierung mit Anteilen von Chrom, Molybdän, Rhenium und/oder Tantal. Vorzugsweise enthält die eutektische NiAl-Legierung wenigstens eines der Metalle Tantal, Molybdän und Rhenium in einem Anteil von 0,5 bis 3 Gew.-% sowie Chrom in einem Anteil von 5 bis 7 Gew.-%. Eine Beispielzusammensetzung ist NiAl-Ta_{2.5}-Cr₅₋₇ (at%). Desweiteren können hochtemperaturfeste Titantrialuminide oder zweiphasige Werkstoffe auf der Grundlage von TiAl und TiAl₃ der allgemeinen Formel M₃Ti₈Al₂₂ bzw. M₈₋₉Ti₂₅Al₆₆₋₆₇ mit M = Cr, Mn, Fe, Co und Ni verwendet werden, die in der kubischen L1 (2) -Struktur kristallisieren.

Die Herstellung des monolithischen Adapterelements aus der NiAl-Legierung bzw. den Titantrialuminiden kann durch konventionelle Verfahren wie pulvermetallurgische Verfahren, Giessen, Schmelzen und Schmieden oder andere Umformverfahren erfolgen. Da der Werkstoff des monolithischen Adapterelements mit den Werkstoffen des Rotorgrundkörpers und des Schaufelblatts kompatibel ist, erfolgt bei der Einsatztemperatur nahezu keine Diffusion von Elementen in die jeweiligen Verbindungszonen. Das Gefüge der Verbindungszonen bleibt daher im wesentlichen unverändert und es tritt keine Sprödphasenbildung auf.

Die Abmessungen des Adapterelements liegen bei allen Ausführungsformen der Erfindung vorzugsweise im Bereich zwischen 15 und 55 mm Länge, 5 bis 25 mm Breite und 5 bis 20 mm Höhe.

Gegenstand der Erfindung ist ferner ein Verfahren zur Herstellung eines hybriden Bauteils einer Gasturbine, insbesondere einer Blisk oder Bling, bei dem das Schaufelblatt aus einer Titanlegierung mit dem Rotorkörper aus einer hochwarmfesten Nickellegierung durch Fügen integral verbunden wird, wobei zwischen dem Schaufelblatt und dem Rotorgrundkörper ein Adapterelement angeordnet wird, das aus einem sowohl mit der Titanlegierung als auch der hochwarmfesten Nickellegierung verschweißbaren Werkstoff besteht.

Bevorzugt ist das Fügen ein Reibschweißen.

Vorteilhafte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. In der Zeichnung zeigen:
Fig. 1 eine schematisierte Darstellung des erfindungsgemäßen Bauteils mit Rotorgrundkörper, Schaufelblatt und Adapterelement;
Fig. 2 eine geschnittene Darstellung des Adapterelements gemäß einer ersten Ausführungsform;
Fig. 3 eine geschnittene Darstellung des Adapterelements gemäß einer nicht beanspruckten Ausführungsform; und
Fig. 4 eine schematische Darstellung des Fügeverfahrens zur Herstellung des erfindungsgemäßen Bauteils.

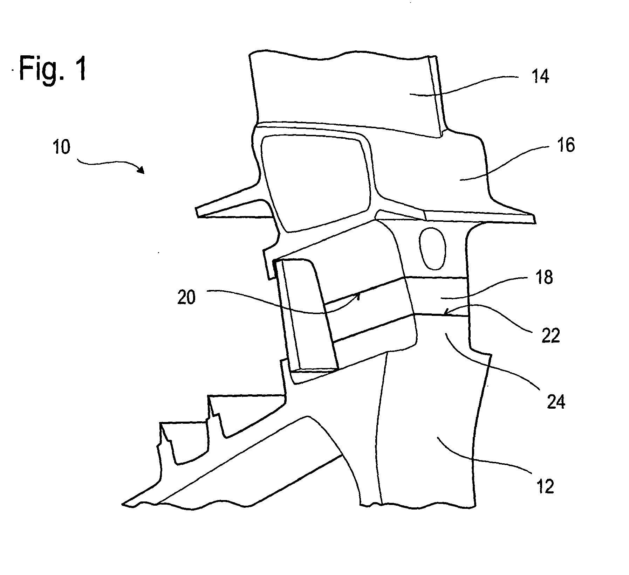

Fig. 1 zeigt eine schematisierte Darstellung eines Gasturbinenrotors 10 für vorzugsweise ein Gasturbinenflugtriebwerk, der als integral beschaufelter Rotor ausgebildet ist. Der Gasturbinenrotor 10 verfügt demnach über einen Rotorgrundkörper 12 sowie Turbinenschaufeln 14, wobei die Turbinenschaufeln 14 integraler Bestandteil des Rotorgrundkörpers 12 sind.

Abhängig davon, ob ein scheibenförmiger oder ringförmiger Rotorgrundkörper vorliegt, wird ein solcher integral beschaufelter Rotor auch als Blisk (für Blade integrated Disk) oder Bling (für Blade integrated Ring) bezeichnet.

Der Rotorgrundkörper 12 besteht aus einer aus einer hochwarmfesten Nickellegierung, vorzugsweise aus einer Nickel-Superlegierung wie Inconel 718.

An den Rotorgrundkörper 12 ist eine Vielzahl von Turbinenschaufeln 14 angefügt, von denen in der Fig. 1 nur eine dargestellt ist. Die Turbinenschaufeln 14 umfassen jeweils ein Schaufelblatt 16 aus einer Titanlegierung und einen Schaufelfuß, der als Adapterelement 18 ausgebildet ist.

Die Titanlegierung des Schaufelblattes 16 ist vorzugsweise aus der Gruppe der Titanbasislegierungen und der TiAl-Legierungen ausgewählt. Bevorzugt ist das Schaufelblatt 16 aus einer TiAl-Legierung mit Anteilen von Titan, Aluminium und Niob bei einem Aluminiumgehalt zwischen 35 und 60 Gew.-% und einem Niobanteil von 2 bis 16 Gew.-% gebildet. Besonders bevorzugt ist die Titanlegierung Ti44A15Nb (at%).

Das Adapterelement 18 besteht erfindungsgemäß aus einem sowohl mit der Titanlegierung als auch der hochwarmfesten Nickellegierung verschweißbaren Werkstoff. An der Verbindungzone 20 ist das Adapterelement 18 integral mit dem Schaufelblatt 16 verbunden. An der gegenüberliegenden Verbindungszone 22 ist das Adapterelement 18 integral mit einem auf dem Rotorgrundkörper 12 gebildeten Höcker 24 verbunden. Die Verbindung zwischen dem Adapterelement 18 und dem Rotorgrundkörper 12 bzw. dem Schaufelblatt 16 erfolgt durch Fügen, vorzugsweise durch Reibschweißen.

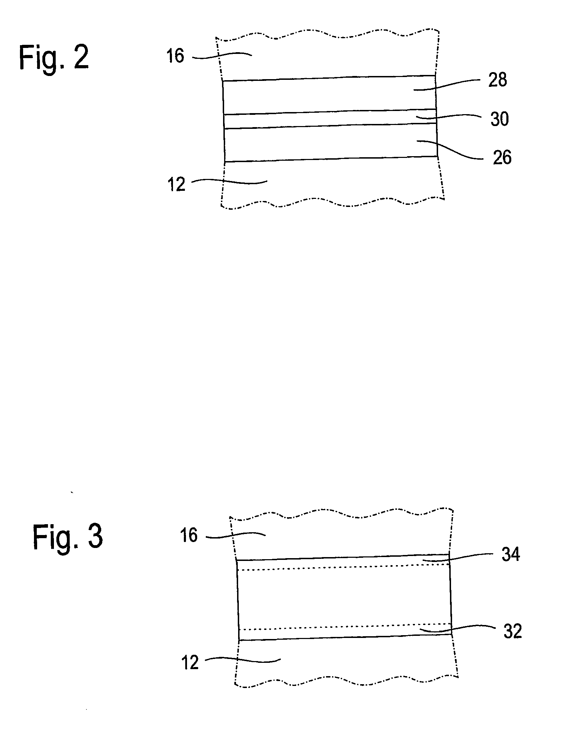

Gemäß der in Fig. 2 gezeigten Ausführungsform weist das Adapterelement 18 wenigstens eine erste Schicht 26 auf, die aus der hochwarmfesten Nickellegierung des Rotorgrundkörpers 12 besteht, und wenigstens eine zweite Schicht 28, die aus der Titanlegierung des Schaufelblatts 16 gebildet ist. Zwischen der ersten und der zweiten Schicht ist eine Zwischenschicht 30 vorgesehen, die als Diffusionsbarriere für Sprödphasen bildende Elemente, insbesondere Aluminium, wirkt. Die Zwischenschicht 30 ist integral mit der ersten und der zweiten Schicht 26 bzw. 28 verbunden. Die erste Schicht 26 grenzt an den Rotorgrundkörper 12 und die zweite Schicht 28 an das Schaufelblatt 16 an.

Die Zwischenschicht kann beispielsweise eine mit Metallpartikeln versetzte Matrix aus einer hochwarmfesten Nickellegierung wie z.B. Inconel 718 oder einer TiAl-Legierung sein. Vorzugsweise handelt es sich bei den Metallpartikeln um Partikel aus Metalllegierungen. Besonders bevorzugt bestehen die Metallpartikel aus Refraktärmetall- oder Platinmetalllegierungen mit Anteilen von Aluminium und einem zweiten Metall aus der Gruppe Rhenium, Iridium, Ruthenium, Platin, Tantal, Niob, Molybdän, Wolfram bei einem Aluminiumgehalt zwischen 2 und 60 Gew.-%. Eine weitere bevorzugte Zusammensetzung der Metallpartikel umfasst 2 bis 40 Gew.-% Aluminium, 5 bis 20 Gew.-% eines Metalls aus der aus Nickel, Kobalt, Vanadium und Chrom bestehenden Gruppe und zum Rest eines weiteren Metalls aus der aus Rhenium, Iridium, Ruthenium, Platin, Tantal, Niob, Molybdän und Wolfram bestehenden Gruppe.

Die Partikel weisen vorzugsweise eine mittlere Größe von 0,1 bis 200 µm auf und liegen gleichmäßig im der Matrixlegierung verteilt vor. Besonders bevorzugt sind die Metallpartikel vollständig von der Matrixlegierung umschlossen, so dass die Oberfläche der Zwischenschicht keine Metallpartikel aufweist. Der Anteil der Metallpartikel in der Matrixlegierung beträgt vorzugsweise 5 bis 45 Vol.-%.

Bevorzugt hat die Zwischenschicht 30 eine Dicke von etwa 0,5 mm bis 2 mm.

Das Adapterelement mit der Zwischenschicht 30 als Diffusionssperre wird bevorzugt durch Sintern eines Pulvers aus den Matrixwerkstoffen und den Metallpartikeln hergestellt. Dabei kann das Sintern auf alle dem Fachmann bekannte Weisen, beispielsweise durch einen Laser, einen Elektronenstrahl oder direkten Stromdurchgang, jeweils mit und ohne Anwendung von Druck, erfolgen. Auch ein schichtweises Sintern ist möglich.

Die in Fig. 3 gezeigte Ausführungsform stellt ein nicht beanspruchtes Adapterelement 18 mit einem gradierten Aufbau dar. In der dem Rotorgrundkörper 12 zugewandten Oberflächenschicht 32 weist das Adapterelement 18 eine Zusammensetzung aus einer Nickellegierung wie Inconel 718 auf, die dem Werkstoff des Rotorgrundkörpers 12 entspricht. In der dem Schaufelblatt 16 zugewandten Oberflächenschicht 34 hat das Adapterelement eine Zusammensetzung aus einer Titanlegierung, die dem Werkstoff des Schaufelblatts entspricht, wie beispielsweise Ti44A15Nb. Zwischen den Oberflächenschichten 32, 34 wechselt die Zusammensetzung des Adapterelements kontinuierlich oder stufenweise von der Nickellegierung hin zur Titanlegierung, d. h., der Nickelanteil nimmt von der Fläche 32 in der Richtung zur Fläche 34 hin ab, und der Titananteil und/oder der Aluminiumanteil nehmen in der gleichen Richtung zu. Die Herstellung eines derartigen gradierten Adapterelements kann beispielsweise durch Laser-Pulverauftragsschweißen oder andere bekannte pulvermetallurgische Verfahren erfolgen.

Gemäß einer weiteren nicht zur Erfindung gehrenden Ausführungsform (nicht gezeigt) besitzt das Adapterelement 18 einen monolithischen Aufbau und besteht aus einem Werkstoff mit einer Zusammensetzung, die sowohl Elemente der Titanlegierung für das Schaufelblatt 16 als auch Elemente der Nickellegierung für den Rotorgrundkörper 12 umfasst.

Der Werkstoff für das monolithische Adapterelement 18 ist bevorzugt eine eutektische NiAl-Legierung mit Anteilen von Chrom, Molybdän, Rhenium und /oder Tantal. Bevorzugt ist eine Legierung der allgemeinen Formel NiAl-X-Cr wobei X wenigstens eines der Metalle Tantal, Molybdän und Rhenium bedeutet. Der Anteil des Metalls X beträgt vorzugsweise 0,5 bis 3 Gew.-% und der Cr-Anteil liegt zwischen 5 und 7 Gew.-%. Eine Beispielzusammensetzung ist NiAl-Ta_{2.5}-Cr₅₋₇ (at%). Desweiteren können hochtemperaturfeste Titanaluminium-Werkstoffe der allgemeinen Formel M₃Ti₈Al₂₂ bzw. M₈₋₉Ti₂₅Al₆₆₋₆₇ mit M = Cr, Mn, Fe, Co und Ni verwendet werden, die in der kubischen L1(2) -Struktur kristallisieren. Die Herstellung des monolithischen Adapterelements 18 aus der NiAl-Legierung bzw. de Titanaluminium-Werkstoff kann durch konventionelle Verfahren wie pulvermetallurgische Verfahren, Giessen, Schmelzen und Schmieden erfolgen.

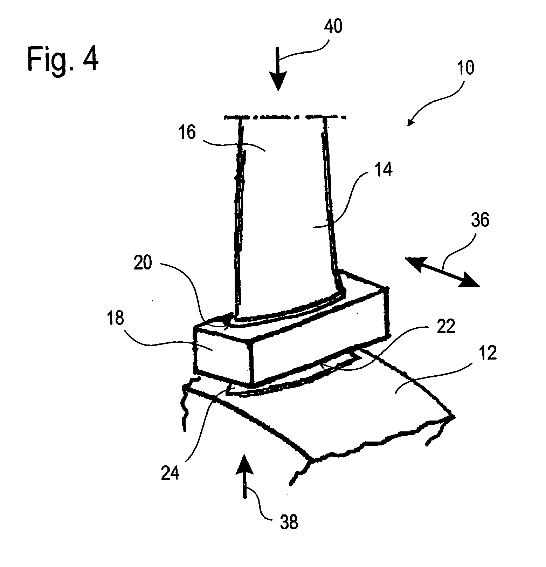

Nachfolgend wird die Herstellung des erfindungsgemäßen Bauteils unter Bezugnahme auf die Figur 4 beschrieben.

Die Figur 4 verdeutlicht das Verfahren zum Fügen von Bauteilen bei der Herstellung bzw. Reparatur eines integral beschaufelten hybriden Gasturbinenrotors 10, wobei das Schaufelblatt 16 aus der Titanlegierung an den Höcker 24 des Rotorgrundkörpers 12 aus einer Nickellegierung gefügt wird.

Bei diesem Verfahren wird zusätzlich zu dem Rotorgrundkörper 12 und dem Schaufelblatt 16, die integral miteinander zu verbinden sind, das Adapterelement 18 bereitgestellt, das erfindungsgemäß aus einem sowohl mit der Titanlegierung als auch der hochwarmfesten Nickellegierung verschweißbaren Werkstoff besteht. Das Schaufelblatt 16, der Rotorgrundkörper 12 und das Adapterelement 18 werden dann so zueinander ausgerichtet, dass das Adapterelement 18 zwischen dem Höcker 24 des Rotorgrundkörpers 12 und dem Schaufelblatt 16 angeordnet ist.

Zum Verbinden von Schaufelblatt 16 und Rotorgrundkörper 12 wird nun das Adapterelement 18 im Sinne des Doppelpfeils 36 gegenüber dem Rotorgrundkörper 12 und dem Schaufelblatt 16 translatorisch bzw. linear hin- und herbewegt, wobei sowohl der Rotorgrundkörper 12 als auch das Schaufelblatt 16 stillstehen. Zusätzlich wird in Richtung der Pfeile 38 und 40 sowohl über den stillstehenden Rotorgrundkörper 12 als auch das ebenfalls stillstehende Schaufelblatt 16 eine Stauchkraft und damit ein Stauchdruck auf die Verbindungszone 22, die zwischen dem Rotorgrundkörper 12 und dem Adapterelement 18 ausgebildet ist, und die Verbindungszone 20 aufgebracht, die sich zwischen dem Adapterelement 18 und dem Schaufelblatt 16 befindet. Dadurch erfolgt ein Warmverschmieden im Bereich der Verbindungszonen 20 und 22 unter Bildung einer integralen Verbindung der Turbinenschaufel 14 mit dem Rotorgrundkörper 12, wobei das Adapterelement 18 den Schaufelfuß der Turbinenschaufel 14 ausbildet.

Das Adapterelement 18 wird vorzugsweise mit einer Frequenz in der Größenordnung zwischen 10 Hz und 30 Hz, insbesondere mit einer Frequenz von in etwa 20 Hz, gegenüber dem stillstehenden Rotorgrundkörper 12 und dem ebenfalls stillstehenden Schaufelblatt 16 hin - und herbewegt. Der Hub des Adapterelements 18 liegt dabei in einer Größenordnung zwischen 0,1 mm und 3 mm, und beträgt insbesondere etwa 2 mm. Die zum Schweißen aufgebrachte Stauchkraft liegt bei maximal 50.000 N.

## Patentansprüche

1. Bauteil einer Gasturbine, insbesondere eine Blisk oder eine Bling , wobei das Bauteil einen Rotorgrundkörper (12) und eine Vielzahl von an den Rotorgrundkörper angefügten Turbinenschaufeln (14) umfasst, wobei die Turbinenschaufeln (14) jeweils ein Schaufelblatt (16) aus einer Titanlegierung und einen Schaufelfuß umfassen, der Schaufelfuß als Adapterelement (18) ausgebildet ist, wobei aus einem sowohl mit der Ti- **dadurch gekennzeichnet, daß** der Rotorground körper (12) aus einer hochwarmfesten Nickellegierung bestent und das Adapter element (18) tanlegierung als auch mit der hochwarmfesten Nickellegierung verschweißbaren Werkstoff besteht und sowohl mit dem Rotorgrundkörper (12) als auch mit dem Schaufelblatt (16) durch Fügen integral verbunden ist, wobei das Adapterelement (18) wenigstens eine erste Schicht (26) umfasst, die aus der hochwarmfesten Nickellegierung besteht, wenigstens eine zweite Schicht (28) umfasst, die aus der Titanlegierung besteht, und wenigstens eine Zwischenschicht (30) zwischen der ersten und der zweiten Schicht als Diffusionsbarriere für Sprödphasen bildende Elemente umfasst.

2. Bauteil nach Anspruch 1, **dadurch gekennzeichnet, dass** die Titanlegierung eine Titanbasislegierung oder eine Titan-Aluminium-Legierung ist.

3. Bauteil nach Anspruch 1 oder 2, **dadurch gekennzeichnet, dass** die Titanlegierung eine Titan-Aluminium-Legierung mit Anteilen von Titan, Aluminium und Niob ist.

4. Bauteil nach Anspruch 3, **dadurch gekennzeichnet, dass** die Titan-Aluminium-Legierung einen Aluminiumanteil zwischen 35 und 60 Gew.-% und einen Niobanteil von 2 bis 16 Gew.-%, und zum Rest Titan, aufweist.

5. Bauteil nach einem der Ansprüche 1 bis 4, **dadurch gekennzeichnet, dass** die Nickellegierung eine Nickel-Superlegierung ist.

6. Bauteil nach Anspruch 5, **dadurch gekennzeichnet, dass** die Nickel-Superlegierung zwischen 50 und 55 % Ni, zwischen 17 bis 21 % Cr und zum Rest Eisen umfasst, zuzüglich geringer Anteile von Nb/Ta, Mo, Ti, A1 und weiteren Spurenelementen.

7. Bauteil nach Anspruch 1, **dadurch gekennzeichnet, dass** die Zwischenschicht (30) eine Matrixlegierung aus der Gruppe der Nickelbasislegierungen, der Nickel-Superlegierungen und der TiAl-Legierungen mit darin verteilten Metallpartikeln umfasst.

8. Bauteil nach Anspruch 7, **dadurch gekennzeichnet, dass** die Metallpartikel aus einer Legierung mit 2 bis 60 Gew.-% A1 und zum Rest aus wenigstens einem weiteren Metall der Gruppe Rhenium, Iridium, Ruthenium, Platin, Tantal, Niob, Molybdän und Wolfram zusammengesetzt sind.

9. Bauteil nach Anspruch 8, **dadurch gekennzeichnet, dass** die Metallpartikel aus einer Legierung mit 2 bis 40 Gew.-% Aluminium, 5 bis 20 Gew.-% eines Metalls aus der aus Nickel, Kobalt, Vanadium und Chrom bestehenden Gruppe und zum Rest eines weiteren Metalls aus der aus Rhenium, Iridium, Ruthenium, Platin, Tantal, Niob, Molybdän und Wolfram bestehenden Gruppe zusammengesetzt sind.

10. Bauteil nach einem der Ansprüche 1 bis 6, **dadurch gekennzeichnet, dass** das Adapterelement (18) einen gradierten Aufbau mit einer vom Werkstoff des Rotorgrundkörpers (12) zum Werkstoff des Schaufelblatts (16) wechselnden Zusammensetzung aufweist.

11. Bauteil nach Anspruch 10, **dadurch gekennzeichnet, dass** der Titangehalt des Adapterelements (18) von einer dem Rotorgrundkörper (12) zugewandten Oberflächenschicht (32) in Richtung auf eine gegenüberliegende, dem Schaufelblatt (16) zugewandte Oberflächenschicht (34) stufenweise oder kontinuierlich zunimmt.

12. Bauteil nach Anspruch 10 oder 11, **dadurch gekennzeichnet, dass** der Nickelgehalt des Adapterelements (18) von einer dem Rotorkörper (12) zugewandten Oberflächenschicht (32) in Richtung auf eine gegenüberliegende, dem Schaufelblatt (16) zugewandte Oberflächenschicht (34) stufenweise oder kontinuierlich abnimmt.

13. Bauteil nach einem der Ansprüche 1 bis 6, **dadurch gekennzeichnet, dass** das Adapterelement (18) aus einer eutektischen NiAl-Llegierung mit Anteilen von Chrom, Molybdän, Rhenium und/oder Tantal zusammengesetzt ist.

14. Bauteil nach Anspruch 13, **dadurch gekennzeichnet, dass** die eutektische NiAl-Legierung NiAl-Ta_{2.5}-Cr₅₋₇ (at%) ist.

15. Bauteil nach einem der Ansprüche 1 bis 6, **dadurch gekennzeichnet, dass** das Adapterelement aus einem kubischen Titanaluminium-Werkstoff besteht, welcher der allgemeinen Formel M₃TiₑAl₂₂ oder M₈₋₉Ti₂₅Al₆₆₋₆₇ mit M = Cr, Mn, Fe, Co und Ni entspricht.

16. Verfahren zur Herstellung eines hybriden Bauteils einer Gasturbine, insbesondere einer Blisk oder Bling, **dadurch gekennzeichnet, dass** ein Schaufelblatt (16) aus einer Titanlegierung mit einem Rotorkörper (12) aus einer hochwarmfesten Nickellegierung durch Fügen integral verbunden wird, wobei zwischen dem Schaufelblatt (16) und dem Rotorgrundkörper (12) ein Adapterelement (18) angeordnet wird, das aus einem sowohl mit der Titanlegierung als auch der hochwarmfesten Nickellegierung verschweißbaren Werkstoff besteht, das Adapterelement (18) wenigstens eine erste Schicht (26) umfasst, die aus der hochwarmfesten Nickellegierung besteht, wenigstens eine zweite Schicht (28) umfasst, die aus der Titanlegierung besteht, und wenigstens eine Zwischenschicht (30) zwischen der ersten und der zweiten Schicht als Diffusionsbarriere für Sprödphasen bildende Elemente umfasst.

17. Verfahren nach Anspruch 16, **dadurch gekennzeichnet, dass** das Fügen ein Reibschweißen ist.

## Claims

1. Component of a gas turbine, in particular a blisk or a bling, the component comprising a rotor body (12) and a plurality of turbine blades (14) attached to the rotor body, each of the turbine blades (14) comprising a blade leaf (16), made of a titanium alloy, and a blade root, the blade root taking the form of an adapter element (18), **characterised in that** the rotor body (12) consists of a high-temperature-resisting nickel alloy and the adapter element (18) consists of a material capable of being welded both to the titanium alloy and to the high-temperature-resisting nickel alloy and is integrally connected both to the rotor body (12) and to the blade leaf (16) by jointing, the adapter element (18) comprising at least one first layer (26) that consists of the high-temperature-resisting nickel alloy, at least one second layer (28) that consists of the titanium alloy, and at least one interlayer (30) between the first and second layers as a diffusion barrier for elements forming brittle phases.

2. Component according to Claim 1, **characterised in that** the titanium alloy is a titanium-base alloy or a titanium/aluminium alloy.

3. Component according to Claim 1 or 2, **characterised in that** the titanium alloy is a titanium/aluminium alloy with proportions of titanium, aluminium and niobium.

4. Component according to Claim 3, **characterised in that** the titanium/aluminium alloy has an aluminium proportion between 35 % and 60 % by weight and a niobium proportion from 2 % to 16 % by weight, the remainder being titanium.

5. Component according to one of Claims 1 to 4, **characterised in that** the nickel alloy is a nickel superalloy.

6. Component according to Claim 5, **characterised in that** the nickel superalloy comprises between 50 % and 55 % Ni, between 17 % and 21 % Cr, the remainder being iron, plus small proportions of Nb/Ta, Mo, Ti, Al and further trace elements.

7. Component according to Claim 1, **characterised in that** the interlayer (30) comprises a matrix alloy from the group of the nickel-base alloys, the nickel superalloys and the TiAl alloys with metal particles distributed therein.

8. Component according to Claim 7, **characterised in that** the metal particles are composed of an alloy containing 2 % to 60 % by weight aluminium and, for the remainder, of at least one further metal from the group consisting of rhenium, iridium, ruthenium, platinum, tantalum, niobium, molybdenum and tungsten.

9. Component according to Claim 8, **characterised in that** the metal particles are composed of an alloy containing 2 % to 40 % by weight aluminium, 5 % to 20 % by weight of a metal from the group consisting of nickel, cobalt, vanadium and chromium and, for the remainder, of a further metal from the group consisting of rhenium, iridium, ruthenium, platinum, tantalum, niobium, molybdenum and tungsten.

10. Component according to one of Claims 1 to 6, **characterised in that** the adapter element (18) exhibits a graduated structure with a composition varying from the material of the rotor body (12) to the material of the blade leaf (16).

11. Component according to Claim 10, **characterised in that** the titanium content of the adapter element (18) increases incrementally or continuously from a surface layer (32) facing towards the rotor body (12) in the direction towards an opposite surface layer (34) facing towards the blade leaf (16).

12. Component according to Claim 10 or 11, **characterised in that** the nickel content of the adapter element (18) decreases incrementally or continuously from a surface layer (32) facing towards the rotor body (12) in the direction towards an opposite surface layer (34) facing towards the blade leaf (16).

13. Component according to one of Claims 1 to 6, **characterised in that** the adapter element (18) is composed of a eutectic NiAl alloy with proportions of chromium, molybdenum, rhenium and/or tantalum.

14. Component according to Claim 13, **characterised in that** the eutectic NiAl alloy is NiAl-Ta_{2.5}-Cr₅₋₇ (atom%).

15. Component according to one of Claims 1 to 6, **characterised in that** the adapter element consists of a cubic titanium/aluminium material that corresponds to the general formica M₃Ti₈Al₂₂ or M₈₋₉Ti₂₅Al₆₆₋₆₇, with M = Cr, Mn Fe, Co or Ni.

16. Process for producing a hybrid component of a gas turbine, in particular a blisk or bling, **characterised in that** a blade leaf (16) made of a titanium alloy is integrally connected to a rotor body (12) made of a high-temperature-resisting nickel alloy by jointing, wherein an adapter element (18) that consists of a material capable of being welded both to the titanium alloy and to the high-temperature-resisting nickel alloy is arranged between the blade leaf (16) and the rotor body (12), the adapter element (18) comprises at least one first layer (26) that consists of the high-temperature-resisting nickel alloy, at least one second layer (28) that consists of the titanium alloy, and at least one interlayer (30) between the first and second layers as a diffusion barrier for elements forming brittle phases.

17. Process according to Claim 16, **characterised in that** the jointing is friction welding.

## Revendications

1. Composant d'une turbine à gaz, en particulier disque aubagé monobloc ou anneau aubagé monobloc, ledit composant comprenant un corps de base de rotor (12) et une pluralité d'aubes de turbines (14) assemblées au corps de base de rotor, les aubes de turbines (14) comportant chacune une pale (16) en alliage de titane et un pied d'aube, le pied d'aube étant réalisé comme élément adaptateur (18), **caractérisé en ce que** le corps de base de rotor (12) est constitué d'un alliage de nickel résistant aux hautes températures et **en ce que** l'élément adaptateur (18) est constitué d'un matériau pouvant être soudé aussi bien à l'alliage de titane qu'à l'alliage de nickel résistant aux hautes températures, et qui est raccordé d'un seul tenant par assemblage au corps de base de rotor (12) ainsi qu'à la pale (16), l'élément adaptateur (18) comportant au moins une première couche (26) constituée de l'alliage de nickel résistant aux hautes températures, au moins une deuxième couche (28) constituée de l'alliage de titane, et au moins une couche intercalaire (30) entre la première et la deuxième couches, en tant que barrière de diffusion pour des éléments générateurs de phases fragiles.

2. Composant selon la revendication 1, **caractérisé en ce que** l'alliage de titane est un alliage à base de titane ou un alliage titane-aluminium.

3. Composant selon la revendication 1 ou la revendication 2, **caractérisé en ce que** l'alliage de titane est un alliage titane-aluminium avec des parts de titane, d'aluminium et de niobium.

4. Composant selon la revendication 3, **caractérisé en ce que** l'alliage titane-aluminium présente une part d'aluminium comprise entre 35 % % et 60 % en poids et une part de niobium comprise entre 2 % et 16 % en poids, le reste étant du titane.

5. Composant selon l'une des revendications 1 à 4, **caractérisé en ce que** l'alliage de nickel est un super-alliage de nickel.

6. Composant selon la revendication 5, **caractérisé en ce que** le super-alliage de nickel comprend entre 50 % et 55 % de Ni, entre 17 % et 21 % de Cr, le reste étant du fer, plus de faibles part de Nb/Ta, Mo, Ti, Al et d'autres éléments-traces.

7. Composant selon la revendication 1, **caractérisé en ce que** la couche intercalaire (30) comprend un alliage à matrice du groupe des alliages à base de nickel, des super-alliages de nickel et des alliages TiAl contenant une répartition de particules métalliques.

8. Composant selon la revendication 7, **caractérisé en ce que** les particules métalliques sont composées d'un alliage avec 2 % à 60 % en poids d' Al, le reste étant constitué d'au moins un autre métal du groupe formé par : rhénium, iridium, ruthénium, platine, tantale, niobium, molybdène et tungstène.

9. Composant selon la revendication 8, **caractérisé en ce que** les particules métalliques sont composées d'un alliage avec 2 % à 40 % en poids d'aluminium, 5 % à 20 % en poids d'un métal du groupe formé par : nickel, cobalt, vanadium et chrome, le reste étant constitué d'au moins un autre métal du groupe formé par : rhénium, iridium, ruthénium, platine, tantale, niobium, molybdène et tungstène.

10. Composant selon l'une des revendications 1 à 6, **caractérisé en ce que** l'élément adaptateur (18) présente une construction progressive, avec une composition variant du matériau du corps de base de rotor (12) au matériau de la pale (16).

11. Composant selon la revendication 10, **caractérisé en ce que** la teneur en titane de l'élément adaptateur (18) augmente par degrés ou de manière continue, d'une couche de surface (32) faisant face au corps de base de rotor (12) à une couche de surface (34) opposée, faisant face à la pale (16).

12. Composant selon la revendication 10 ou 11, **caractérisé en ce que** la teneur en nickel de l'élément adaptateur (18) diminue par degrés ou de manière continue, d'une couche de surface (32) faisant face au corps de rotor (12) à une couche de surface (34) opposée faisant face à la pale (16).

13. Composant selon l'une des revendications 1 à 6, **caractérisé en ce que** l'élément adaptateur (18) se compose d'un alliage eutectique NiAl avec des parts de chrome, molybdène, rhénium et/ou tantale.

14. Composant selon la revendication 13, **caractérisé en ce que** l'alliage eutectique NiAl est NiAl-Ta_{2.5}-Cr₅₋₇ (at %).

15. Composant selon l'une des revendications 1 à 6, **caractérisé en ce que** l'élément adaptateur se compose d'un matériau cubique titane-aluminium, lequel satisfait à la formule générale M₃Ti₈Al₂₂ ou M₈₋₉Ti₂₅Al₆₆₋₆₇, avec M = Cr, Mn, Fe, Co et Ni.

16. Procédé de fabrication d'un composant hybride d'une turbine à gaz, en particulier disque aubagé monobloc ou anneau aubagé monobloc, **caractérisé en ce qu'**une pale (16) en alliage de titane est raccordée d'un seul tenant par assemblage à un corps de rotor (12) en alliage de nickel résistant aux hautes températures, un élément adaptateur (18) étant disposé entre la pale (16) et le corps de base de rotor (12), lequel est constitué d'un matériau pouvant être soudé aussi bien à l'alliage de titane qu'à l'alliage de nickel résistant aux hautes températures, **en ce que** l'élément adaptateur (18) comporte au moins une première couche (26) constituée de l'alliage de nickel résistant aux hautes températures, au moins une deuxième couche (28) constituée de l'alliage de titane, et au moins une couche intercalaire (30) entre la première et la deuxième couches, en tant que barrière de diffusion pour des éléments générateurs de phases fragiles.

17. Procédé selon la revendication 16, **caractérisé en ce que** l' assemblage est un soudage par friction.
